# EUROPÄISCHE PATENTSCHRIFT

(11) **EP 0 597 805 B1**
(45) Veröffentlichungstag und Bekanntmachung des Hinweises auf die Patenterteilung: **24.04.1996**
(21) Anmeldenummer: 93810753.9
(22) Anmeldetag: 28.10.1993
(51) Int. Cl.: F16L 33/04, F16L 3/14

(54) **Rohrschelle**
Pipe clamp
Collier de serrage pour tuyau

(30) Priorität: 07.11.1992 DE 4237674
(43) Veröffentlichungstag der Anmeldung: 18.05.1994
(73) Patentinhaber: HILTI Aktiengesellschaft, FL-9494 Schaan (LI)
(72) Erfinder: Hense, Urlich, D-86899 Landsberg (DE); Hoefle, Siegfried, A-6840 Götzis (AT)
(74) Vertreter: Wildi, Roland

(56) Entgegenhaltungen:
- EP-A- 0 225 516
- DE-U- 9 205 682
- FR-A- 2 457 403

## Beschreibung

Die Erfindung betrifft eine Rohrschelle mit zwei Schellenhälften, deren eine Enden gelenkig miteinander verbunden sind und deren andere Enden miteinander verschliessbar sind, wobei das verschliessbare Ende einer ersten Schellenhälfte eine sich im wesentlichen in Richtung des Schellenhälftenendes fortsetzende Leiste mit Anschlägen aufweist und das verschliessbare Ende einer zweiten Schellenhälfte einen radial abstehenden Flansch mit Durchtrittsöffnung für die Leiste der ersten Schellenhälfte aufweist, wobei die Durchtrittsöffnung von einer gegen Federkraft wegschwenkbaren, mit den Anschlägen der Leiste zusammenwirkenden Lasche an der der ersten Schellenhälfte abgewandten Seite des Flansches teilweise abdeckbar ist.

Rohrschellen der hier zur Diskussion stehenden Art dienen der Befestigung von Rohren an Decken, Wänden, Böden und dgl. Dabei sind die Befestigungsstellen oftmals für das Montagepersonal ausserordentlich schwer zugänglich. Aus diesem Grunde wird eine äusserst hohe Montagefreundlichkeit solcher Rohrschellen verlangt.

Die Montage der Rohrschellen erfolgt meistens in einem ersten und die schlussendliche Befestigung der Rohre unter Schliessen der zuvor befestigten Rohrschellen in einem zweiten Arbeitsgang. Da es sich bei den zu montierenden Rohren meistens um sperrige und zum Teil auch schwere Gegenstände handelt, wird von den Rohrschellen gefordert, dass sie in einfacher Weise möglichst nur unter Zuhilfenahme von nur einer Hand von einer Bedienungsperson verschliessbar sind.

Die sehr weit verbreiteten Rohrschellen, bei welchen zwei Schellenhälften nach Zusammenschwenken mittels einer Verschlussschraube miteinander verbunden werden müssen, können die vorgenannten Forderungen keineswegs erfüllen. Bei diesen Rohrschellen benötigt die Bedienungsperson eine Hand zum Zusammenführen der Schellenhälften und die anderen Hand zum Einführen und Festziehen der Verschlussschraube. Zum Halten und Positionieren der Rohre ist daher eine weitere Bedienungsperson erforderlich.

Es besteht demnach die Forderung nach einer Rohrschelle, bei welcher mit einfachsten Mitteln die Schellenhälften mindestens in einer Weise miteinander verbunden werden können, dass die Rohre vorpositioniert sind und es keiner weiteren Halterung mehr bedarf. Insbesondere sollen die Verschlussmittel derart einfach sein, dass eine Einhandbedienung möglich ist.

Die zum Teil in Richtung Vermeidung von Nachteilen betreffend Bedienungskomfort bekanntgewordenen Lösungen konnten sich in der Praxis nicht ausreichend durchsetzen, da noch immer Verschlussschrauben vorgesehen sind, welche eine gezielte Positionierung und ein nachträgliches, recht zeitaufwendiges Festspannen erfordern.

Aus der DE-PS 32 35 329 ist auf dem Gebiet der Schlauchschellen eine einstückige Bandschelle bekannt, deren Schellenenden ohne Verschlussschraube miteinander verbindbar sind. Dabei weist das eine Ende der Schelle eine Leiste mit einer nach aussen gerichteten Verzahnung auf. Das zweite Schellenende weist eine recht aufwendig geformte Verschlaufung zur Bildung einer Durchtrittsöffnung für die Leiste der ersten Schellenhälfte auf. Dadurch, dass es sich um eine Bandschelle aus relativ leicht verformbarem Bandmaterial handelt, ist zur Bildung eines ausreichend steifen Flansches die aufwendige Verschlaufung notwendig. Die leichte Verformbarkeit des Bandmaterials ermöglicht aber auch, das freie Ende als Abdeckung für die Durchtrittsöffnung zur verwenden, um so ein Zurücktreten der ersten mit der Leiste versehenen Schellenende zu verhindern. Diese relativ einfache Möglichkeit der Schaffung einer allerdings aus dem sehr leicht verformbaren Bandmaterial bestehenden Abdeckung für die Durchtrittsöffnung hat aber den grossen Nachteil, dass sich die durch die Belastungen hervorgerufenen Kräfte nur in einem äusserst geringen Rahmen bewegen dürfen.

Die vorgenannte, aus dem Gebiet der Schlauchschellen bekannte, schraubenlose Verschlussmöglichkeit kann auf das Gebiet der Rohrschellen nicht übertragen werden. Weil bei den Rohrschellen aufgrund der hohen Belastungen ganz andere Kraftverhältnisse vorliegen, findet anderes Material Anwendung, welches sich nicht in der Weise wie Bandmaterial der vorgenannten Art einfach umformen lässt.

Ausgehend von einer bekannten Rohrschelle gemäß Oberbegriff von Anspruch 1 liegt der Erfindung die Aufgabe zugrunde, eine hohen Belastungsanforderungen gerecht werdende Rohrschelle zu schaffen, deren Schellenhälften sich in einfacher und bedienungsfreundlicher Weise sowie mit einem äusserst geringen Zeitaufwand verbinden lassen.

Erfindungsgemäss wird die Aufgabe dadurch gelöst, dass die mit den Anschlägen der Leiste zusammenwirkende Lasche als in sich steife, über ein Gelenk mit dem Flansch verbundene Platte ausgebildet ist und zur Erzeugung der Federkraft ein sich an der Platte und am Flansch abstützendes Federglied vorgesehen ist.

Die Platte deckt die Durchtrittsöffnung so weit ab, dass der freibleibende Teil der Axialprojektion der Leiste ohne Anschläge entspricht. Wird die Leiste durch die von der Platte abgedeckte Durchtrittsöffnung hindurchgeführt, schwenkt die Platte weg, so dass der freie Bereich der Durchtrittsöffnung um das Mass der Axialprojektion der Anschläge vergrössert wird. Nach Erreichen der Endstellung der durch die Durchtrittsöffnung durchgeführten Leiste schwenkt die Platte unter Hintergreifen des entsprechenden Anschlages zurück, so dass nur noch ein der axialen Projektion der Leiste ohne Anschläge entsprechender Bereich der Durchtrittsöffnung von der Platte nicht abgedeckt ist. Die damit mit der Platte zusammenwirkenden Anschläge verhindern ein Zurückweichen der eingeführten Leiste.

Der vorstehend erläuterte erfindungsgemässe Verschluss der Rohrschelle ermöglicht eine äusserst einfache, bedienungsfreundliche Montage der Rohre. Dabei werden die Rohre in die zuvor montierte Rohrschelle eingeführt und die beiden gelenkig miteinander verbundenen Schellenhälften geschlossen, indem deren freie Enden zusammengeführt werden. Das Zusammenführen der beiden freien Enden bewirkt, dass die mit Anschlägen versehene Leiste der ersten Schellenhälfte durch die Durchtrittsöffnung des Flansches der zweiten Schellenhälfte hindurchgeführt wird und zwar so weit, bis in der Endlage die über ein Gelenk mit dem Flansch verbundene Platte den entsprechenden Anschlag an der Leiste der ersten Schellenhälfte hintergreift. Dadurch entsteht der Vorteil, dass ein Verschliessen der Rohrschelle ohne aufwendiges Betätigen einer Verschlussschraube erfolgen kann. Sofern es vorkommen sollte, dass das Hintergreifen des entsprechenden Anschlages durch die Platte noch nicht zu einer ausreichenden Verspannung der zu montierenden Rohre führt, besteht die Möglichkeit, die gelenkige Verbindung der beiden Schellenhälften über eine an sich bekannte Schraube zu bewerkstelligen. Somit können durch Festziehen dieser Schraube die Rohre innerhalb der Rohrschelle noch endgültig verspannt werden.

Die vorgenannte Lösung bildet somit nicht nur in Richtung Montagefreundlichkeit und Verminderung des Montageaufwandes wesentliche Vorteile, sondern auch einen wesentlichen Schritt in Richtung weiterer Wirtschaftlichkeit. Insbesondere wird diese weitere Wirtschaftlichkeit dadurch erreicht, dass auf eine Verschlussschraube verzichtet werden kann und somit allenfalls noch eine Schraube erforderlich ist, welche in an sich bekannter Weise der Bildung der gelenkigen Verbindung zwischen den beiden Schellenhälften dient.

Eine insbesondere aus herstellungstechnischer Sicht bevorzugte Ausbildung des zwischen Flansch und Platte vorgesehenen Gelenkes wird erzielt, wenn das Gelenk eine parallel zur Mittelachse der Rohrschelle verlaufende Schwenkachse aufweist. Dabei kann das Gelenk in einfacher Weise in Form einer Zunge an dem einen Teil, welche in eine Ausnehmung in dem anderen Teil eingreift, ausgebildet sein. Dabei bietet es sich an, die Zunge an der Platte und die Ausnehmung am Flansch vorzusehen.

Bevorzugte Verhältnisse in baulicher Hinsicht werden erreicht, wenn das Gelenk im Bereich des freien Endes des Flansches angeordnet ist. Es kann dadurch in einer Ebene parallel zum Flansch eine ausreichende Verspannung der Platte selbst bei hohen Belastungen erzielt werden.

Das zur Erzeugung der Federkraft vorgesehene Federglied ist zweckmässigerweise als gummielastisches Element ausgebildet. Dabei kann dieses gummielastische Element beispielsweise in Form eines Flansch und Platte umgebenden Gummiringes ausgebildet sein. Anstelle eines solchen Gummiringes bietet sich auch eine Scheibe aus Gummi an, welche beispielsweise an der Zunge der Platte befestigt ist und sich am Flansch abstützt. Eine solche Scheibe wird im Gegensatz zu dem auf Zug beanspruchten Gummiring auf Biegung beansprucht.

Die Anschläge der Leiste der ersten Schellenhälfte weisen bevorzugt in einer parallel zur Mittelachse der Rohrschelle verlaufenden Ebene liegende Anschlagflächen auf. Diese Anschlagflächen können an verschiedenartig ausgebildeten Anschlägen vorgesehen sein.

Eine bevorzugte Ausführungsform zur Bildung von Anschlägen besteht darin, dass zahnförmige Vorsprünge an der Leiste vorgesehen sind, wobei die Anschlagflächen an solchen zahnartigen Vorsprüngen sind. Aus herstellungtechnischer Sicht bringt es Vorteile, die zahnartigen Vorsprünge zur Schellenaussenseite hin offen auszubilden. Die Herstellung der zahnartigen Vorsprünge kann durch entsprechende Ausbildung und Umformung der Leistenseiten erfolgen oder die Ebene der Leiste kann direkt mit solchen Vorsprüngen versehen sein. Die Profilform und die Anzahl der Vorsprünge lässt sich ebenfalls variieren, wobei relativ wenige, mit einem groben Profil versehene Vorsprünge in belastungstechnischer Hinsicht Vorteile bringen, aber weniger Verrastungsmöglichkeiten bieten. Dagegen bietet eine feinere Profilierung der Vorsprünge mehr Verrastungsmöglichkeiten, bedingt aber in belastungstechnischer Hinsicht aufgrund der kleineren Anschlagflächen weiterer Massnahmen, insbesondere hinsichtlich Verstemmung der Platte. Die Platte selbst bedarf keiner besonderen Ausbildung, dh in ihrer einfachsten Form kann die ohne besondere Ausgestaltung versehene Seitenkante der Platte zum Hintergreifen der Anschläge herangezogen werden. Besondere Ausgestaltungen der Platte sind allenfalls dann erforderlich, wenn besondere Führungsfunktionen miteinbezogen werden müssen.

Eine weitere Möglichkeit der Anordnung der Anschläge der Leiste besteht darin, dass die Leiste fensterartige Durchbrüche aufweist und somit die entsprechenden Kanten dieser fensterartigen Durchbrüche die Anschlagflächen bilden. Bei einer diesbezüglichen Ausbildung ist es erforderlich, dass die Platte einen mit den fensterartigen Durchbrüchen zusammenwirkenden Lappen aufweist, so dass dieser Lappen beim Zurückschwenken der Platte den betreffenden Anschlag hintergreift.

Die Erfindung wird nachstehend anhand von Zeichnungen, welche Ausführungsbeispiele wiedergeben, näher erläutert. Es zeigen:
- Fig. 1: eine geöffnete Rohrschelle, geschnitten entlang der senkrecht zur Mittelachse verlaufenden Mittelebene;
- Fig. 2: die Rohrschelle der Fig. 1 entsprechend geschnitten in geschlossener Stellung;
- Fig. 3: eine Ansicht eines Teiles der Rohrschelle der Fig. 2 in Richtung A;
- Fig. 4: eine weitere Ausführungsform einer Rohrschelle in einem der Fig. 1 entsprechenden Schnitt in geschlossener Stellung;
- Fig. 5: eine Ansicht eines Teiles der Rohrschelle der Fig. 4 in Richtung B.

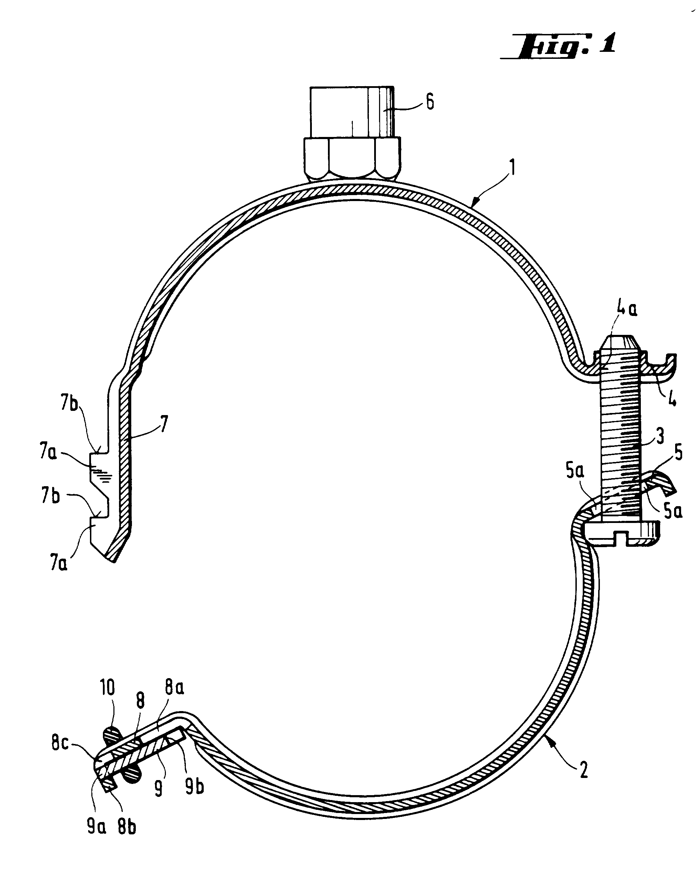

Die Rohrschelle der Fig. 1 bis 3 besteht aus einer ersten Schellenhälfte 1 und einer zweiten Schellenhälfte 2. Die beiden Schellenhälften 1, 2 sind gelenkig miteinander verbunden, was hier beispielsweise über eine Schraube 3 erfolgt. Zu diesem Zwecke weist die erste Schellenhälfte 1 einen Flanschteil 4 und die zweite Schellenhälfte 2 einen Flanschteil 5 auf. Im Flanschteil 4 ist die Schraube 3 über ein Innengewinde 4a gehaltert und durchgreift ein Langloch 5a im Flanschteil 5.

Zur Befestigung der Schelle, beispielsweise mittels einer Gewindestange, ist die erste Schellenhälfte 1 ferner mit einer Gewindemutter 6 versehen.

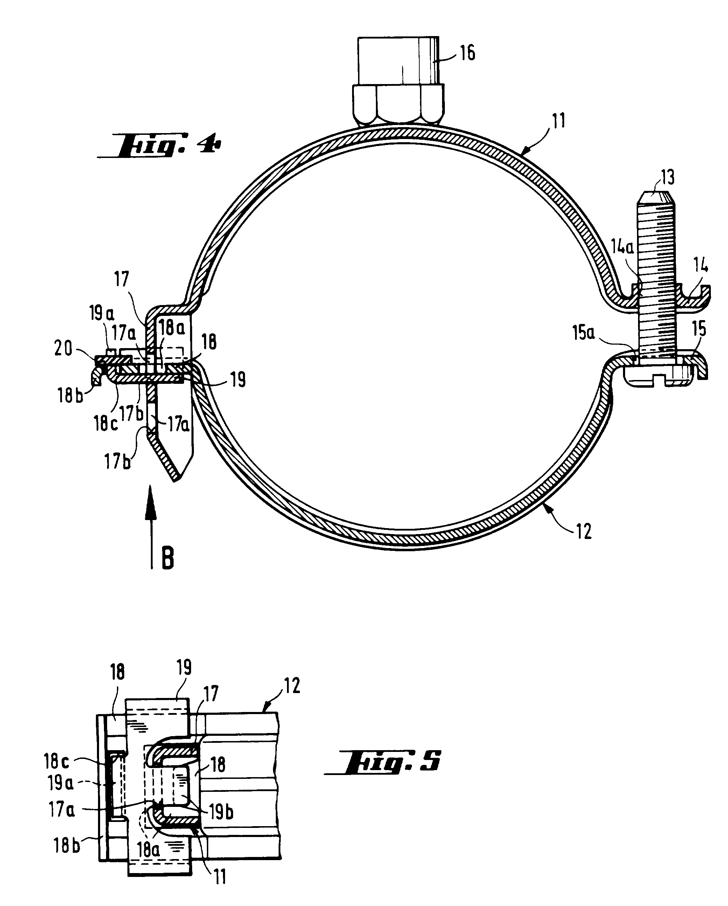

Wie die Fig. 1 bis 3 ferner zeigen, ist die erste Schellenhälfte 1 mit einer Leiste 7 versehen, welche zur Bildung von Anschlägen zahnartige Vorsprünge 7a mit Anschlagflächen 7b aufweist. Wie insbesondere Fig. 3 zeigt, sind diese zahnartigen Vorsprünge 7a an entsprechend ausgebildeten Kanten, die von der ersten Schellenhälfte 1 hochgebogen sind, angeordnet.

Die zweite Schellenhälfte 2 weist einen Flansch 8 auf. Dieser Flansch 8 ist mit einer Durchtrittsöffnung 8a versehen und weist ein hochgebogenes Ende 8b auf. Die Durchtrittsöffnung 8a des Flansches 8 wird teilweise von einer Platte 9 abgedeckt, welche über ein Gelenk mit dem Flansch 8 verbunden ist. Zur Bildung des Gelenkes weist die Platte 9 eine Zunge 9a auf, welche eine Ausnehmung 8c im Flansch 8 durchgreift.

Um sicherzustellen, dass die Platte 8 in die gemäss den Fig. 1 bis 3 gezeigten Positionen zurückschwenkt, ist ein Federglied 10 vorgesehen. Dieses Federglied 10 ist im gezeigten Fall als Gummiring ausgebildet, welcher die Platte 9 und den Flansch 8 umgreift.

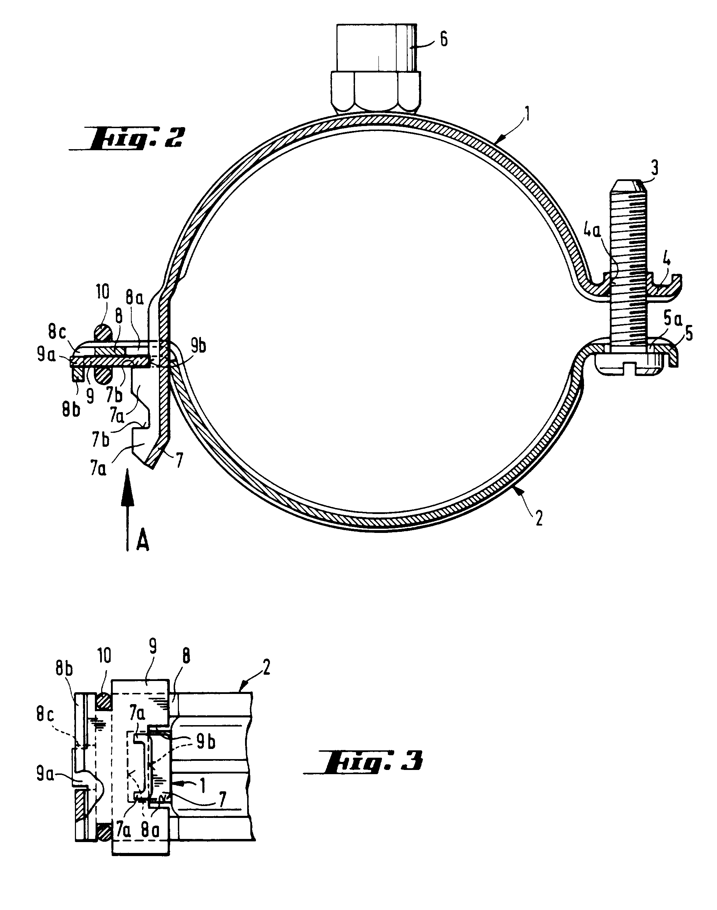

In den Fig. 2 und 3 wird gezeigt, wie in geschlossener Stellung der Rohrschelle die Platte 9 einen zahnartigen Vorsprung 7a hintergreift und somit unter der Einwirkung des Federgliedes 10 vollkommen zurückgeschwenkt ist. Es handelt sich somit um eine geschlossene Stellung der Rohrschelle, aus welcher sie sich selbsttätig nicht mehr öffnen lässt. Sollte in dieser Stellung noch keine ausreichende Verspannung der Rohre erzielt worden sein, besteht die Möglichkeit, die Rohre durch Festziehen der Schraube 3 festzuspannen.

Die in Fig. 3 gezeigte Ausführungsform der Platte 9 soll nur eine beispielhafte Ausführungsform darstellen. Die Aussparung 9b dient lediglich der zusätzlichen Führung der Leiste 7, ist aber für die Grundfunktion der Platte 9 nicht zwingend erforderlich. Ebenso eignet sich für das Hintergreifen der zahnartigen Vorsprünge 7a eine geradlinig ausgebildete Seitenkante der Platte 9.

Die Fig. 4 und 5 zeigen eine weitere Ausführungsform einer Rohrschelle, wobei sich diese Rohrschelle gegenüber der Rohrschelle der Fig. 1 bis 3 nur im Bereich ihres Verschlusses unterscheiden. Somit ist auch hier eine erste Schellenhälfte 11 und eine zweite Schellenhälfte 12 vorgesehen, welche jeweils Flanschteile 14, 15 aufweisen. Im Zusammenwirken mit den Flanschteilen 14, 15, kommt über eine Schraube 13 eine gelenkige Verbindung zustande, indem die Schraube 13 mit einem Innengewinde 14a im Flanschteil 14 in Verbindung steht und ein Langloch 15a im Flanschteil 15 durchgreift.

Zur Befestigung der Rohrschelle weist die erste Schellenhälfte 11 wiederum beispielsweise für eine Gewindestange eine Gewindemutter 16 auf.

Die erste Schellenhälfte 11 weist eine Leiste 17 auf, welche zur Bildung von Anschlägen mit fensterartigen Durchbrüchen 17a versehen ist, welche die Anschlagflächen 17b bilden. Die zweite Schellenhälfte 12 ist mit einem Flansch 18 versehen, der eine Durchtrittsöffnung 18a aufweist. Die Durchtrittsöffnung 18a des Flansches 18 wird von einer Platte 19 abgedeckt, welche zwischen der Aussenkontur der zweiten Schellenhälfte 12 und einem Vorsprung 18b des Flansches 18 gelagert ist. Verbunden ist die Platte 19 über ein Gelenk, das von einer Zunge 19a der Platte 19 und einer Ausnehmung 18c im Flansch 18 gebildet ist.

Zur Sicherung der Zurückschwenkung der Platte 19 entsprechend den Fig. 4 und 5 ist eine gummielastische Scheibe 20 vorgesehen. Diese Scheibe 20 wird von der Zunge 19a der Platte 19 durchgriffen und stützt sich am Flansch 18 ab.

Wie insbesondere Fig. 5 zeigt, ist die Platte 19 mit einem Lappen 19b versehen, welcher die fensterartigen Durchbrüche 17a durchgreift und für das Zusammenwirken mit den Anschlagflächen 17b massgebend ist. Somit lässt sich auch bei dieser Ausführungsform - wie dies auch wieder insbesondere Fig. 5 zeigt - eine Leiste 17 durch Hochbiegen der Ränder der ersten Schellenhälfte 11 herstellen, wobei in diesem Falle nicht die Ränder, sondern der Mittelbereich einer besonderen Bearbeitung bedarf.

Die Montage der Rohre erfolgt analog der Rohrschelle gemäss den Fig. 1 bis 3.

## Patentansprüche

1. Rohrschelle mit zwei Schellenhälften (1, 2, 11, 12), deren eine Enden gelenkig miteinander verbunden sind und deren andere Enden miteinander verschliessbar sind, wobei das verschliessbare Ende einer ersten Schellenhälfte (1, 11) eine sich im wesentlichen in Richtung des Schellenhälftenendes fortsetzende Leiste (7, 17) mit Anschlägen aufweist und das verschliessbare Ende einer zweiten Schellenhälfte (2, 12) einen radial abstehenden Flansch (8, 18) mit Durchtrittsöffnung (8a, 18a) für die Leiste (7, 17) der ersten Schellenhälfte (1, 11) aufweist, wobei die Durchtrittsöffnung (8a, 18a) von einer gegen Federkraft wegschwenkbaren, mit den Anschlägen der Leiste (7, 17) zusammenwirkenden Lasche an der der ersten Schellenhälfte (1, 11) abgewandten Seite des Flansches (8, 18) teilweise abdeckbar ist, **dadurch gekennzeichnet,** dass die mit den Anschlägen der Leiste (7, 17) zusammenwirkende Lasche als in sich steife, über ein Gelenk (8c, 9a, 18c, 19a) mit dem Flansch (8, 18) verbundene Platte (9, 19) ausgebildet ist und zur Erzeugung der Federkraft ein sich an der Platte (9, 19) und am Flansch (8, 18) abstützendes Federglied (10, 20) vorgesehen ist.

2. Rohrschelle nach Anspruch 1, dadurch gekennzeichnet, dass das Gelenk (8c, 9a, 18c, 19a) eine parallel zur Mittelachse der Rohrschelle verlaufende Schwenkachse aufweist.

3. Rohrschelle nach Anspruch 2, dadurch gekennzeichnet, dass das Gelenk (8c, 9a, 18c, 19a) im Bereich des freien Endes des Flansches (8, 18) angeordnet ist.

4. Rohrschelle nach einem der Ansprüche 1 bis 3, dadurch gekennzeichnet, dass das Federglied (10, 20) ein gummielastisches Element ist.

5. Rohrschelle nach einem der Ansprüche 1 bis 4, dadurch gekennzeichnet, dass die Anschläge der Leiste (7, 17) in einer parallel zur Mittelachse der Rohrschelle verlaufenden Ebene liegende Anschlagflächen (7b, 17b) aufweisen.

6. Rohrschelle nach Anspruch 5, dadurch gekennzeichnet, dass die Anschlagflächen (7b) an zahnartigen Vorsprüngen (7a) der Leiste (7) vorgesehen sind.

7. Rohrschelle nach Anspruch 6, dadurch gekennzeichnet, dass die zahnartigen Vorsprünge (7a) zur Rohrschellenausseite hin offen sind.

8. Rohrschelle nach Anspruch 5, dadurch gekennzeichnet, dass die Anschlagflächen (17b) an fensterartigen Durchbrüchen (17a) der Leiste (17) angeordnet sind.

## Claims

1. A pipe clamp comprising two clamp halves (1, 2, 11, 12) the one ends of which are hinged together and the other ends of which are intractable, and that the lockable end of a first clamp half (1, 11) comprises a strip (7, 17) with stops which extends essentially in the direction of the end of the clamp-half, and the lockable end of a second clamp half (2, 12) comprises a radially protruding flange (8, 18) with a passage (8a, 18a) for the strip (7, 17) of the first clamp half (1, 11), and that the passage (8a, 18a) can be partially covered at the side of the flange (8, 18) facing away from the first clamp half (1,11) by a strip, which is pivoted away against a spring force and which co-acts with the stops of the strip (7, 17), **characterized in that** the flap which co-acts with the stops of the strip (7, 17) is designed as a stiff plate which is connected to the flange (8, 18) via a hinge (8c, 9a, 18c, 19a), and that a spring element (10, 20) is provided, which is supported against both the plate (9, 19) and the flange (8, 18), for the purpose of generating a spring force.

2. A pipe clamp according to Claim 1, **characterized in that** the hinge (8c, 9a, 18c, 19a) comprises a pivot axis which extends parallel to the centre axis of the pipe clamp.

3. A pipe clamp according to Claim 2, **characterized in that** the hinge (8c, 9a, 18c, 19a) is arranged in the area of the free end of the flange (8, 18).

4. A pipe clamp according to one of Claims 1 to 3, **characterized in that** the spring element (10, 20) is a rubber-elastic element.

5. A pipe clamp according to one of Claims 1 to 4, **characterized in that** the stops of the strip (7, 17) comprise stop surfaces (7b, 17b) in a plane which extends parallel to the centre axis of the pipe clamp.

6. A pipe clamp according to Claim 5, **characterized in that** the stop surfaces (7b) are provided on tooth-like protrusions (7a) of the strip (7).

7. A pipe clamp according to Claim 6, **characterized in that** the toothlike protrusions (7a) are open towards the outside of the pipe clamp.

8. A pipe clamp according to Claim 5, **characterized in that** the stop surfaces (17b) are arranged on window-like passages (17a) of the strip (17).

## Revendications

1. Collier de serrage pour tuyau, comprenant deux moitiés de collier (1, 2, 11, 12) articulées l'une avec l'autre à l'une de leurs extrémités et dont les autres extrémités sont bloquées l'une sur l'autre, l'extrémité verrouillable d'une première moitié de collier (1, 11) présentant une baguette (7, 17) avec des butées qui se prolonge sensiblement en direction de l'extrémité de la moitié de collier, tandis que l'extrémité verrouillable d'une seconde moitié de collier (2, 12) est pourvue d'une bride (8, 18) en saillie radiale, avec une ouverture de passage (8a, 18a) pour la baguette (7, 17) de la première moitié de collier (1, 11), l'ouverture de passage (8a, 18a) pouvant être recouverte en partie, sur le côté de la bride (8, 18) détourné de la première moitié de collier (1, 11), par une patte qui peut être pivotée contre la force d'un ressort et coopère avec les butées de la baguette (7, 17), **caractérisé en ce** que la patte coopérant avec les butées de la baguette (7, 17) est réalisée sous la forme d'une plaque (9, 19) rigide et couplée avec la bride (8, 18) par l'intermédiaire d'une articulation (8c, 9a, 18c, 19a), et qu'un élément de ressort (10, 20) prenant appui sur la plaque (9, 19) et sur la bride (8, 18) est prévu pour la production de la force de ressort.

2. Collier de serrage pour tuyau selon la revendication 1, caractérisé en ce que l'articulation (8c, 9a, 18c, 19a) présente un axe de pivotement orienté parallèlement à l'axe médian du collier de serrage.

3. Collier de serrage pour tuyau selon la revendication 2, caractérisé en ce que l'articulation (8c, 9a, 18c, 19a) est disposée dans la région de l'extrémité libre de la bride (8, 18).

4. Collier de serrage pour tuyau selon l'une des revendications 1 à 3, caractérisé en ce que l'élément de ressort (10, 20) est un élément caoutchouteux.

5. Collier de serrage pour tuyau selon l'une des revendications 1 à 4, caractérisé en ce que les butées de la baguette (7, 17) présentent des surfaces d'arrêt (7b, 17b) situées dans un plan orienté parallèlement à l'axe médian du collier de serrage.

6. Collier de serrage pour tuyau selon la revendication 5, caractérisé en ce que les surfaces d'arrêt (7b) sont prévues sur des saillies (7a) de la baguette (7), conformées en dents.

7. Collier de serrage pour tuyau selon la revendication 6, caractérisé en ce que les saillies (7a) en forme de dents sont ouvertes en direction de la surface extérieure du collier de serrage.

8. Collier de serrage pour tuyau selon la revendication 5, caractérisé en ce que les surfaces d'arrêt (17b) sont disposées sur des ajours (17a) de la baguette (17) en forme de fenêtres.
